# EUROPÄISCHE PATENTSCHRIFT

(11) **EP 0 638 147 B1**
(45) Veröffentlichungstag und Bekanntmachung des Hinweises auf die Patenterteilung: **27.12.1996**
(21) Anmeldenummer: 94906145.1
(22) Anmeldetag: 26.01.1994
(51) Int. Cl.: F16C 9/04, F16C 33/60

(54) **VERFAHREN ZUM HERSTELLEN EINES BAUTEILS MIT WENIGSTENS EINER GETEILTEN LAUFFLÄCHE FÜR WÄLZKÖRPER**
PROCESS FOR PRODUCING A COMPONENT WITH AT LEAST ONE DIVIDED BEARING SURFACE FOR ROLLING ELEMENTS
PROCEDE DE FABRICATION D'UN ELEMENT CONSTITUTIF COMPORTANT AU MOINS UNE SURFACE DE ROULEMENT DIVISEE POUR ELEMENTS DE ROULEMENT

(30) Priorität: 01.03.1993 DE 4306280
(43) Veröffentlichungstag der Anmeldung: 15.02.1995
(73) Patentinhaber: SINTERMETALLWERK KREBSÖGE GMBH, D-42477 Radevormwald (DE)
(72) Erfinder: WEBER, Manfred, D-58456 Witten (DE); NEUBERT, Harald, D-40789 Monheim (DE); EILRICH, Uwe, D-51789 Lindlar (DE)
(74) Vertreter: Maxton, Alfred, Dipl.-Ing.
(86) Internationale Anmeldenummer: EP9400198
(87) Internationale Veröffentlichungsnummer: WO9420765

(56) Entgegenhaltungen:
- EP-A- 0 342 800
- FR-A- 2 443 299
- GB-A- 1 371 617
- GB-A- 2 245 318
- US-A- 5 051 232
- PATENT ABSTRACTS OF JAPAN vol. 8, no. 152 (M-309) 14. Juli 1984 & JP,A,59 047 524 (NTN TOYO BEARING) 17. März 1984

## Beschreibung

Die Erfindung betrifft ein Verfahren zum Herstellen eines Bauteils mit wenigstens einer geteilten, zum Teil auf einem Lagerdeckel und zum Teil auf dem restlichen Bauteil befindlichen Lauffläche für Wälzkörper, sowie das Bauteil selbst.

Derartige Bauteile können beispielsweise als Pleuel mit einem kleinen Pleuelauge, einem Schaft und einem großen Pleuelauge ausgebildet sein, wobei das große Pleuelauge einen geteilten Lagersitz für die Lagerung des Pleuels an der Kurbelwelle aufweist. Da sich die Erfindung insbesondere auf die Herstellung eines Pleuels bezieht, ist im folgenden überwiegend von einem Pleuel die Rede, ohne das damit eine Beschränkung verbunden sein soll.

Ein Pleuel wird im allgemeinen dadurch hergestellt, daß zunächst ein Formteil, z. B. durch Schmieden, Gießen oder pulvermetallurgische Verfahren, hergestellt wird, wobei das Innenmaß des großen Pleuelauges im Bereich der zukünftigen Trennstelle ein Aufmaß aufweist. An dieser Stelle wird das große Pleuelauge, z. B. durch Sägen, getrennt, wodurch das Aufmaß weitgehend beseitigt wird. Die Trennflächen der somit gebildeten Pleuelkappe einerseits und des restlichen Pleuels andererseits werden in einem weiteren Verfahrensschritt paßgenau, z. B. durch Schleifen, bearbeitet. Die Pleuelkappe wird in fertigem Zustand mittels Pleuelschrauben an dem restlichen Pleuel befestigt, wobei die dazu erforderlichen Schraubenlöcher vor oder nach der Trennung gebohrt werden können. In zusammengesetztem Zustand des Pleuels erfolgt anschließend die mechanische Bearbeitung des Lagersitzes zur Aufnahme von Lagerschalenhälften, die zwischen Pleuel und Kurbelwelle unter Bildung eines Gleitlagers angeordnet sind.

Ein anderes Verfahren zum Abtrennen der Pleuelkappe von dem restlichen Pleuel ist aus der DE-C-38 06 236 bekannt, bei welchem die Pleuelkappe durch Bruchtrennung vom restlichen Pleuel getrennt wird. Dabei wird als Trennfläche eine Bruchfläche mit großer, unregelmäßiger Oberfläche erzeugt, wodurch ein seitlicher Versatz der Pleuelkappe auf dem restlichen Pleuel nahezu ausgeschlossen ist. Damit wird zum einen erreicht, daß die Fixierung der Lagerschalen in dem Lagersitz des Pleuels verbessert wird, und zum anderen, daß nur die jeweils abgetrennte Pleuelkappe auf dem jeweils restlichen Pleuel befestigt werden kann, da die Bruchoberfläche einzigartig ist. Verwechslungen von Einzelteilen, z. B. bei der Montage oder Reparatur des Motors, werden dadurch ausgeschlossen.

Je nach Ausbildung des Motors kann es zweckmäßig oder sogar erforderlich sein, daß anstelle der üblicherweise verwendeten Gleitlagerung des Pleuels an der Kurbelwelle eine Wälzlagerung, insbesondere über Nadellager vorgesehen wird. Dies ist beispielsweise bei großvolumigen Motoren oder Kleinstmotoren der Fall.

Bei der Anordnung von Wälzkörpern zwischen Kurbelwelle und Pleuel ist es erforderlich, daß auch die äußere Lauffläche, also die auf dem Pleuel angeordnete Lauffläche, eine hohe Härte aufweist, um der stetigen Beanspruchung durch die Wälzkörper standzuhalten. Weiterhin ist es aus Montagegründen erforderlich, daß auch diese Lauffläche als geteilte Lauffläche ausgebildet ist. Die Verwendung von üblichen Lagerschalenhälften oder von entsprechend ausgebildeten äußeren Laufringen für die Wälzkörper ist daher nicht ohne weiteres möglich. Weiterhin würde durch die gleichzeitige Verwendung von Wälzkörpern einerseits und geteiltem äußeren Lagerring andererseits das bauliche Ausmaß des Pleuels und somit die hin- und herbewegbare Masse im Motor und dessen Gewicht erhöht werden, wodurch u. a. der Kraftstoffverbrauch des Motors ungünstig beeinflußt würde.

Es ist möglich, die Lagersitzflächen des geteilten Lagersitzes, z. B. durch Randschichthärten, mit einer für die Wälzlagerung entsprechenden Härte zu versehen. Jedoch weisen die Werkstoffe zur Herstellung der Pleuel nicht den erforderlichen Kohlenstoffgehalt auf, da ein erhöhter Kohlenstoffgehalt sowohl der Umformung als auch der mechanischen Bearbeitung entgegensteht. Es ist daher erforderlich, daß derartige Pleuel vor dem Randschichthärten in einer kohlenstoffhaltigen Atmosphäre aufgekohlt werden. Dabei muß beachtet werden, daß aufgrund der besonderen Beanspruchung des Pleuels eine Aufkohlung lediglich im Bereich der Lauffläche erfolgen sollte, so daß mit aufwendigen Vorbereitungsmaßnahmen eine Aufkohlung der Randschicht des restlichen Pleuels verhindert werden muß.

Ein weiteres Problem bei der Herstellung eines Bauteils mit einer geteilten Lauffläche für Wälzkörper besteht darin, daß die Wälzkörper sich bei jeder Drehbewegung über die Trennstelle zwischen Lagerdeckel und restlichem Bauteil bewegen. Es ist auch bei sorgfältigster mechanischer Bearbeitung nicht auszuschließen, daß die Trennstelle in Form einer minimalen Trennfuge vorhanden bleibt. Weiterhin besteht die Gefahr, daß durch seitlichen Versatz des Lagerdeckels auf dem restlichen Bauteil nach der Montage sowohl in radialer als auch in axialer Richtung die Trennfuge vergrößert wird, so daß die Lauffläche nicht mehr eben ausgebildet ist. Beide Erscheinungen führen dazu, daß ein frühzeitiger Verschleiß der Wälzkörper zu erwarten ist, wodurch ein Ausfall des Motors bewirkt werden könnte.

Der Erfindung liegt die Aufgabe zugrunde, ein Verfahren zum Herstellen eines Bauteils mit wenigstens einer geteilten Lauffläche für Wälzkörper zu schaffen, bei dem die obengenannten Nachteile weitestgehend vermieden werden. Weiterhin soll das Verfahren einfach und kostengünstig durchführbar sein.

Die Aufgabe wird gemäß der Erfindung dadurch gelöst, daß aus einem Werkstoff mit wenigstens 0,5 Gewichts-% Kohlenstoff ein Formteil hergestellt wird, von dem der Lagerdeckel mittels Bruchtrennung abgetrennt wird, und das Bauteil zumindest im Bereich der Lauffläche durch Randschichthärten mit einer Härte von wenigstens 55, vorzugsweise von wenigstens 60 HRC versehen wird. Dabei kann vorgesehen werden, daß das Abtrennen des Lagerdeckels durch Bruchtrennung vor oder nach dem Randschichthärten erfolgt. Das Formteil kann z. B. mittels pulvermetallurgischer Verfahren, z. B. Sintern oder Sinterschmieden hergestellt werden. Dies hat den Vorteil, daß ein Werkstoff verwendet werden kann, der einen für eine Randschichthärtung erforderlichen Kohlenstoffgehalt aufweist, ohne daß zusätzliche Aufkohlungsmaßnahmen erforderlich sind. Dieser erhöhte Kohlenstoffgehalt wirkt sich bei dem im allgemeinen anschließenden Umformprozeß, nämlich Kalibrieren oder Schmieden, nach dem Formgebungsprozeß nicht störend aus, da nur geringe Umformungswege benötigt werden. Das Abtrennen des Lagerdeckels von dem restlichen Bauteil mittels Bruchtrennung hat den Vorteil, daß ein seitlicher Versatz sowohl in axialer als auch in radialer Richtung weitestgehend vermieden wird. In Abhängigkeit von der anschließenden mechanischen Bearbeitung der Lauffläche kann daher eine Lauffläche ohne Trennfugen erzeugt werden, die auch während des Betriebs erhalten bleibt. Dies ist möglich, da es sich bei der Nahtlinie zwischen den jeweiligen Einzelteilen um eine äußerst feine, unregelmäßige Linie handelt. Insbesondere bei Nadellagern liegt somit der Wälzkörper immer mit einem Bereich auf einem ebenen Abschnitt des einen oder anderen Teils der Lauffläche auf, ohne daß er beim Ubergang zwischen Lagerdeckel und restlichem Bauteil eine Trennfuge als solche überwinden muß.
Um eine Bruchtrennung des Lagerdeckels von dem restlichen Bauteil an der gewünschten Trennstelle zu bewirken, ist es zweckmäßig, daß im Bereich dieser Trennstelle zwischen Lagerdeckel und restlichem Bauteil wenigstens eine Anrißkerbe im Bereich der Lauffläche vorgesehen wird. Die Anrißkerbe kann beispielsweise durch mechanische Bearbeitung, z. B. Fräsen, an dem Formteil angebracht werden. Es ist weiterhin möglich, daß das für die pulvermetallurgische Herstellung des Formteils benötigte Preßwerkzeug für die Formung des Grünlings entsprechend ausgebildete Bereiche hat, so daß der Grünling vor dem sich anschließenden Sinterprozeß bereits mit den Kerben versehen ist. Das Anbringen der Anrißkerben im Bereich der Lauffläche ist deshalb zweckmäßig, da so gewährleistet werden kann, daß die Verbindungslinie zwischen den sich gegenüberliegenden Bruchflächen entlang des Durchmessers der kreisrunden Lauffläche verläuft und somit eine einwandfreie Montage des Bauteils mit der zu lagernden Welle möglich ist. Derartige Anrißkerben werden jedoch auch nach dem Zusammenbau des Bauteils im allgemeinen noch auf der Lauffläche vorhanden sein. In einer weiteren Ausgestaltung der Erfindung ist daher vorgesehen, daß die Anrißkerbe nach der Bruchtrennung durch mechanische Bearbeitung im wesentlichen vollständig entfernt wird und daß erst danach das Randschichthärten und die mechanische Feinstbearbeitung der Lauffläche erfolgt. Dies hat den Vorteil, daß die mechanische Bearbeitung zur Entfernung der Anrißkerbe bei einem noch nicht gehärteten Bauteil erfolgt, so daß einfache Werkzeuge dafür ausreichend sind.

In einer anderen vorteilhaften Ausgestaltung der Erfindung ist vorgesehen, daß die Anrißkerbe im Bereich der Trennstelle eine Tiefe aufweist, die geringer als die durch das Randschichthärten erzielbare Härtetiefe bemessen ist. Bei einer anschließenden mechanischen Bearbeitung zur Entfernung der Anrißkerbe ist somit sichergestellt, daß die gehärtete Randschicht nicht durch diese mechanische Bearbeitung entfernt wird. Weiterhin besteht ein Vorteil darin, daß die mechanische Grobbearbeitung zum Entfernen der Anrißkerbe einerseits und die mechanische Feinstbearbeitung zur passungsgenauen Fertigung der Lauffläche andererseits in einem Arbeitsgang, d. h. bei einer Einspannung des Bauteils erfolgen kann.

Es ist gemäß der Erfindung weiterhin möglich, daß das Formteil durch Sinterschmieden hergestellt wird. Hier kann vorgesehen werden, daß die Anrißkerbe bei der Herstellung des Grünlings mit entsprechend ausgebildeten Preßwerkzeugen erfolgt. Zwischen Sintern und Schmieden erhält die Oberfläche der Anrißkerbe eine Schutzschicht, insbesondere eine Oxidschicht, die beim anschließenden Schmieden zum Formteil nahezu vollständig geschlossen wird. Die Anrißkerbe ist somit als solche nicht mehr vorhanden, jedoch verhindert die aufgebrachte Schutzschicht eine Verbindung des pulvermetallurgischen Ausgangsmaterials an dieser Stelle. Die Bruchtrennung erfolgt daher dennoch an der gewünschten Trennstelle. Dies hat den Vorteil, daß nach dem Bruchtrennen und dem Zusammensetzen des Bauteils keine Trennfuge vorhanden ist, die das Abrollen der Wälzkörper beeinträchtigen könnte. Eine mechanische Bearbeitung zur Entfernung der Anrißstelle könnte somit entfallen. Es ist jedoch auch bei dieser Ausbildung der Anrißkerbe zweckmäßig, wenn durch mechanische Bearbeitung die Anrißkerbe, d. h. die mit der Schutzschicht versehenen Bereiche, entfernt werden, da nicht immer gewährleistet werden kann, daß diese Randbereiche der Beanspruchung durch die Wälzkörper standhalten, so daß es zu Ausbrüchen und somit zur Zerstörung der Lauffläche kommen kann.

Zweckmäßigerweise wird der Lagerdeckel nach dem Abtrennen von dem restlichen Bauteil wieder lösbar mit diesem verbunden. Die sich anschließenden Bearbeitungsvorgänge, nämlich Randschichthärten und/oder mechanische Bearbeitung zum Entfernen der Anrißkerben und/oder mechanische Feinstbearbeitung, können danach im zusammengesetzten Zustand des Bauteils erfolgen. Dies hat zum einen den Vorteil, daß eine passungsgenaue Bearbeitung der einzelnen Laufflächenabschnitte, die die geteilte Lauffläche bilden, erfolgen kann. Zum anderen ist es erst bei der Montage des Pleuels wieder erforderlich, die Einzelteile voneinander zu lösen, wodurch zum einen ein Vertauschen der einander zugeordneten Teile weitestgehend vermieden und zum anderen eine Beschädigung der Bruchfläche verhindert wird. Eine Beschädigung der Bruchfläche, z. B. durch mechanische Verformung, hätte die Folge, daß die Teile nicht mehr aufeinandergesetzt und miteinander verbunden werden könnten.

Zur Herstellung des Formteilsmittels pulvermetallurgischer Verfahren wird gemäß der Erfindung ein Sinterwerkstoff mit einem Kohlenstoffgehalt von 0,5 bis 1 Gewichts-% verwendet. Zweckmäßig ist es, wenn der Kohlenstoffgehalt 0,7 Gewichts-% beträgt. Je nach Anforderung kann es weiterhin vorgesehen werden, daß der Kohlenstoffgehalt mehr als 1 Gewichts-%, z. B. 1 bis 2 Gewichts-%,beträgt. Durch den hohen Kohlenstoffgehalt des Werkstoffs kann eine ausreichende Randschichthärtung erfolgen.

Die Randschichthärtung kann gemäß der Erfindung durch Induktionshärten erfolgen. Dieses Verfahren ist einfach und kostengünstig durchzuführen. Bei dem Randschichthärten durch Induktionshärten werden je nach Art des Verfahrens Härtetiefen von 0,01 bis 6 mm erreicht. Für den Fall, daß die Entfernung der Anrißkerbe erst nach dem Randschichthärten erfolgt, ist es zweckmäßig, daß eine größere Härtetiefe vorgesehen wird, damit auch nach der mechanischen Entfernung der Anrißkerbe und der anschließenden mechanischen Feinstbearbeitung der Lauffläche eine ausreichend gehärtete Schicht auf dem Bauteil vorhanden ist.

Zur Erzeugung einer einwandfreien Bruchfläche ist es erforderlich, daß der Werkstoff ein ausreichendes Sprödbruchverhalten aufweist. Dazu kann es zweckmäßig sein, daß das Formteil zumindest im Bereich der Trennstelle durch gezielte Wärmebehandlung, z. B. durch Kühlen, vor der Bruchtrennung versprödet wird. Das Kühlen an der Trennstelle kann beispielsweise durch partielles Auftragen oder Aufsprühen von einem verflüssigten Gas, z. B. Stickstoff, erfolgen.

Die Erfindung betrifft ferner ein Bauteil mit wenigstens einer geteilten, zum Teil auf einem Lagerdeckel und zum Teil auf dem Bauteil befindlichen Lauffläche für Wälzkörper, das zumindest im Bereich der Lauffläche eine gehärtete Randschicht von wenigstens 55 HRC aufweist und die Trennstelle zwischen Lagerdeckel und restlichem Bauteil eine durch Bruchtrennung erzeugte Trennfläche aufweist. Dieses Bauteil besteht aus einem Werkstoff mit wenigstens 0,5 Gewichts-% Kohlenstoff. Das Bauteil ist beispielsweise als Pleuel für Verbrennungsmotoren mit einem geteilten Pleuelkopf ausgebildet. Besonders zweckmäßig ist es, wenn das Bauteil bzw. das Pleuel mit dem erfindungsgemäßen Verfahren eingangs beschriebener Art hergestellt wird.

Die Erfindung wird anhand der Zeichnung näher erläutert. Es zeigen:
- Fig. 1: eine Ansicht eines Pleuels,
- Fig. 2: ein Lagerdeckel nach der Bruchtrennung,
- Fig. 3: die Einzelheit III gemäß Fig. 1 und
- Fig. 4: die Einzelheit III gemäß Fig. 1, jedoch in einer anderen Ausführungsform.

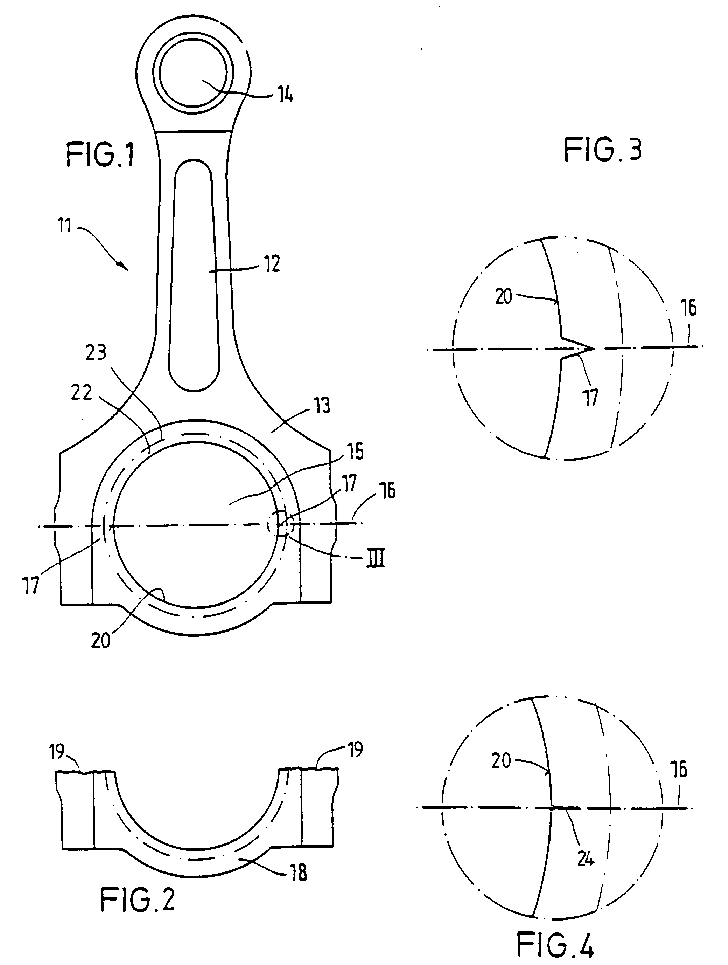

Das in der Zeichnung darstellte, als Pleuel ausgebildete Bauteil 11 weist einen Schaft 12, ein kleines Pleuelauge 14 und ein großes Pleuelauge 15 auf. Das große Pleuelauge 15 ist geteilt ausgebildet, wobei das in den Fig. 1, 3 und 4 dargestellte Ausführungsbeispiel einen Zustand des Pleuels vor der Bruchtrennung des Lagerdeckels 18 von dem restlichen Pleuel 13 darstellt.

Im Bereich der Trennstelle, die im wesentlichen entlang der Ebene 16 verläuft, ist im Bereich der Lauffläche 20 eine Anrißkerbe 17, 24 vorgesehen. Um Mißverständnissen vorzubeugen, wird an dieser Stelle darauf hingewiesen, daß mit der Lauffläche jeweils die der Welle zugeordnete innere Oberfläche des großen Pleuelauges unabhängig von dessen mechanischer Bearbeitung zu verstehen ist.

Gemäß dem Ausführungsbeispiel gemäß Fig. 3 ist die Anrißkerbe 17 in etwa keilförmig in die Lauffläche 20 des Pleuels 11 eingearbeitet. Es sind jedoch auch andere Ausbildungen der Anrißkerbe möglich. Die Anrißkerbe 17 kann beispielsweise durch mechanische Bearbeitung oder durch entsprechende Ausbildung des Preßwerkzeuges für die Herstellung des Grünlings auf der Lauffläche angebracht werden. In der Ausführungsform gemäß Fig. 4 ist eine geschlossene Anrißkerbe 24 dargestellt, die bei der Herstellung des Formlings mittels Sinterschmieden nach dem Aufbringen einer Schutzschicht nach dem Sintern durch den Schmiedevorgang geschlossen worden ist. Die Schutzschicht ist beispielsweise als Oxidschicht ausgebildet, die dadurch hergestellt wird, daß der Formling mit der Anrißkerbe nach dem Sintern durch die Luftatmosphäre zum Schmieden verbracht wird. Die ursprüngliche Anrißkerbe kann auch in diesem Fall durch entsprechend ausgebildete Preßwerkzeuge oder durch mechanische Bearbeitung hergestellt worden sein.

In Fig. 2 ist ein Lagerdeckel 18 nach dem Bruchtrennen desselben von dem restlichen Pleuel 13 dargestellt. Die durch Bruchtrennung erzeugte Trennfläche 19 weist eine große und unregelmäßige Oberfläche auf, die jeweils nur zu der entsprechenden Trennfläche des restlichen Pleuels 13 paßt. Der Lagerdeckel 18 wird nach dem Bruchtrennen in der Regel mittels nicht dargestellter Pleuelschrauben wieder mit dem restlichen Pleuel 13 verbunden. Die Bohrungen für die Pleuelschrauben können dabei vor oder nach der Bruchtrennung angefertigt werden.

Das Pleuel weist im Bereich der Lauffläche 20 einen randschichtgehärteten Bereich 22 auf, der in der Zeichnung durch die strichpunktierte Linie 23 dargestellt ist. Bei dem in der Zeichnung dargestellten Ausführungsbeispiel ist die Härtetiefe größer bemessen als die Tiefe der Anrißkerbe 17 bzw. 24, so daß auch nach entsprechender mechanischer Bearbeitung zur Entfernung der Anrißkerbe 17 bzw. 24 und anschließender Feinstbearbeitung zur passungsgenauen Bearbeitung der Lauffläche 20 eine ausreichend bemessene Schicht größerer Härte vorhanden ist.

Bei dem in der Zeichnung dargestellten Ausführungsbeispiel würde die Bruchtrennung nach dem Randschichthärten erfolgen. Es ist natürlich auch möglich, daß das Randschichthärten nach dem Bruchtrennen erfolgt, wobei in etwa die gleiche Härtetiefe - wie in der Zeichnung dargestellt - eingestellt werden könnte.

Vorstehend wurde überwiegend von einem pulvermetallurgisch hergestellten Pleuel gesprochen. Es sind natürlich auch andere Herstellungsverfahren, z. B. Schmieden, des Pleuels möglich, soweit diese Verfahren durch den erhöhten Kohlenstoffgehalt anwendbar sind. Insbesondere muß eine einwandfreie Bruchtrennung des Bauteils gewährleistet sein.

## Patentansprüche

1. Verfahren zum Herstellen eines Bauteils (11) mit wenigstens einer geteilten, zum Teil auf einem Lagerdeckel (18) und zum Teil auf dem restlichen Bauteil (13) befindlichen Lauffläche (20) für Wälzkörper, bei welchem Verfahren zunächst aus einem Werkstoff mit wenigstens 0,5 Gewichts-% Kohlenstoff ein Formteil hergestellt wird, von dem der Lagerdeckel (18) mittels Bruchtrennung abgetrennt wird, und das Bauteil zumindest im Bereich der Lauffläche (20) durch Randschichthärten mit einer Härte von wenigstens 55 HRC versehen wird.

2. Verfahren nach Anspruch 1, dadurch gekennzeichnet, daß das Formteil mittels pulvermetallurgischer Verfahren hergestellt wird.

3. Verfahren nach Anspruch 1 oder 2, dadurch gekennzeichnet, daß das Randschichthärten vor der Bruchtrennung des Lagerdeckels (18) von dem restlichen Bauteil (13) erfolgt.

4. Verfahren nach Anspruch 1 oder 2, dadurch gekennzeichnet, daß das Randschichthärten nach der Bruchtrennung des Lagerdeckels (18) von dem restlichen Bauteil (13) erfolgt.

5. Verfahren nach einem der Ansprüche 1 bis 4, dadurch gekennzeichnet, daß die Lauffläche (20) durch mechanische Feinstbearbeitung passungsgenau bearbeitet wird.

6. Verfahren nach einem der Ansprüche 1 bis 5, dadurch gekennzeichnet, daß der Lagerdeckel (18) nach der Bruchtrennung lösbar mit dem restlichen Bauteil (13) verbunden wird und die mechanische Bearbeitung und/oder das Randschichthärten im zusammengesetzten Zustand erfolgt.

7. Verfahren nach einem der Ansprüche 1 bis 6, dadurch gekennzeichnet, daß im Bereich der Trennstelle (16) zwischen Lagerdeckel (18) und restlichem Bauteil (13) wenigstens eine Anrißkerbe (17, 24) vorgesehen wird, daß nach der Bruchtrennung die Anrißkerbe (17, 24) durch mechanische Bearbeitung im wesentlichen vollständig entfernt wird und anschließend das Randschichthärten und die mechanische Feinstbearbeitung der Lauffläche (20) erfolgt.

8. Verfahren nach einem der Ansprüche 1 bis 7, dadurch gekennzeichnet, daß im Bereich der Trennstelle (16) zwischen Lagerdeckel (18) und restlichem Bauteil (13) wenigstens eine Anrißkerbe (17,24) vorgesehen wird, deren Tiefe geringer als die durch das Randschichthärten erzielte Härtetiefe bemessen ist und daß die Anrißkerbe (17, 24) bei der mechanischen Bearbeitung und/oder der mechanischen Feinstbearbeitung der Lauffläche (20) im wesentlichen vollständig entfernt wird.

9. Verfahren nach einem der Ansprüche 1 bis 8, dadurch gekennzeichnet, daß das Formteil aus einem Sinterwerkstoff mit 0,5 bis 1 Gewichts-% Kohlenstoff hergestellt wird.

10. Verfahren nach einem der Ansprüche 1 bis 9, dadurch gekennzeichnet, daß das Formteil aus einem Sinterwerkstoff mit 0,7 Gewichts-% Kohlenstoff hergestellt wird.

11. Verfahren nach einem der Ansprüche 1 bis 10, dadurch gekennzeichnet, daß das Formteil durch Sinterschmieden gefertigt wird, wobei die Anrißkerbe (24) vor dem Schmiedeprozeß hergestellt und mit einer Schutzschicht versehen und beim Schmiedeprozeß im wesentlichen vollständig geschlossen wird.

12. Verfahren nach einem der Ansprüche 1 bis 11, dadurch gekennzeichnet, daß das Randschichthärten durch Induktionshärten erfolgt.

13. Verfahren nach einem der Ansprüche 1 bis 12, dadurch gekennzeichnet, daß als Bauteil (11) ein Pleuel mit einem geteilten Pleuelkopf (15) hergestellt wird.

14. Bauteil aus einem Werkstoff mit wenigstens 0,5 Gewichts-% Kohlenstoff und mit wenigstens einer geteilten, zum Teil auf einem Lagerdeckel (18) und zum Teil auf dem restlichen Bauteil (13) befindlichen Lauffläche (20) für Wälzkörper, das zumindest im Bereich der Lauffläche (20) eine gehärtete Randschicht (22) von wenigstens 55 HRC aufweist und die Trennstelle (16) zwischen Lagerdeckel (18) und restlichem Bauteil (13) eine durch Bruchtrennung erzeugte Trennfläche (19) aufweist.

15. Bauteil nach Anspruch 14, dadurch gekennzeichnet, daß der Werkstoff 0,5 bis 1 Gewichts-% Kohlenstoff enthält.

16. Bauteil nach Anspruch 14 oder 15, dadurch gekennzeichnet, daß der Werkstoff 0,7 Gewichts-% Kohlenstoff enthält.

17. Bauteil nach einem der Ansprüche 14 bis 16, dadurch gekennzeichnet, daß als Werkstoff ein Sinterwerkstoff verwendet wird.

18. Bauteil nach einem der Ansprüche 14 bis 17, dadurch gekennzeichnet, daß das Bauteil (11) als Pleuel mit einem geteilten Pleuelkopf (15) ausgebildet ist.

## Claims

1. A method for the production of a component (11) having at least one divided bearing surface (20) for rolling members, located in part on a bearing cap (18) and in part on the rest of the component (13), in which method first of all a shaped part is produced from a material containing at least 0.5% by weight carbon, from which the bearing cap (18) is separated by means of fracture separation, and the component is provided with a hardness of at least 55 HRC by surface layer hardening at least in the region of the bearing surface (20).

2. A method according to Claim 1, characterised in that the shaped part is produced by means of powder-metallurgical processes.

3. A method according to Claim 1 or 2, characterised in that the surface layer hardening is effected before the fracture separation of the bearing cap (18) from the rest of the component (13).

4. A method according to Claim 1 or 2, characterised in that the surface layer hardening is effected after the fracture separation of the bearing cap (18) from the rest of the component (13).

5. A method according to one of Claims 1 to 4, characterised in that the bearing surface (20) is machined with an accurate fit by mechanical microfinishing.

6. A method according to one of Claims 1 to 5, characterised in that the bearing cap (18) after fracture separation is connected detachably to the rest of the component (13) and the machining and/or the surface layer hardening is effected in the assembled state.

7. A method according to one of Claims 1 to 6, characterised in that at least one initial crack notch (17, 24) is provided in the region of the point of separation (16) between the bearing cap (18) and the rest of the component (13), that after fracture separation the initial crack notch (17, 24) is removed substantially completely by machining and then the surface layer hardening and the mechanical microfinishing of the bearing surface (20) is effected.

8. A method according to one of Claims 1 to 7, characterised in that at least one initial crack notch (17, 24) is provided in the region of the point of separation (16) between the bearing cap (18) and the rest of the component (13), the depth of which notch is less than the hardening depth achieved by the surface layer hardening, and that the initial crack notch (17, 24) is removed substantially completely upon the machining and/or the mechanical microfinishing of the bearing surface (20).

9. A method according to one of Claims 1 to 8, characterised in that the shaped part is made from a sintered material containing 0.5 to 1% by weight carbon.

10. A method according to one of Claims 1 to 9, characterised in that the shaped part is made from a sintered material containing 0.7% by weight carbon.

11. A method according to one of Claims 1 to 10, characterised in that the shaped part is produced by sinter-forging, with the initial crack notch (24) being produced before the forging process and being provided with a protective layer and being closed substantially completely during the forging process.

12. A method according to one of Claims 1 to 11, characterised in that the surface layer hardening is effected by induction hardening.

13. A method according to one of Claims 1 to 12, characterised in that a connecting-rod having a divided connecting-rod head (15) is produced as the component (11).

14. A component consisting of a material containing at least 0.5% by weight carbon and having at least one divided bearing surface (20) for rolling members, located in part on a bearing cap (18) and in part on the rest of the component (13), which component has a hardened surface layer (22) of at least 55 HRC at least in the region of the bearing surface (20) and the point of separation (16) between the bearing cap (18) and the rest of the component (13) has a parting plane (19) produced by fracture separation.

15. A component according to Claim 14, characterised in that the material contains 0.5 to 1% by weight carbon.

16. A component according to Claim 14 or 15, characterised in that the material contains 0.7% by weight carbon.

17. A component according to one of Claims 14 to 16, characterised in that a sintered material is used as the material.

18. A component according to one of Claims 14 to 17, characterised in that the component (11) is designed as a connecting-rod having a divided connecting-rod head (15).

## Revendications

1. Procédé de fabrication d'un élément constitutif (11) comportant au moins une surface de roulement (20) divisée se trouvant d'une part sur un chapeau de palier (18) et d'autre part sur l'élément restant (13) et destinée à des éléments de roulement, procédé selon lequel on fabrique d'abord une pièce façonnée à partir d'un matériau comportant au moins 0,5 % en poids de carbone, on sépare ensuite le chapeau de palier (18) au moyen d'une séparation par cassure, et on donne à l'élément constitutif, au moins dans la zone de la surface de roulement (20), au moyen d'une trempe de couche superficielle, une dureté Rockwell échelle C au moins égale à 55.

2. Procédé selon la revendication 1, caractérisé en ce que l'on fabrique la pièce façonnée au moyen d'un procédé de métallurgie des poudres.

3. Procédé selon la revendication 1 ou 2, caractérisé en ce que la trempe de la couche superficielle s'effectue avant la séparation par cassure du chapeau de palier (18) de l'élément restant (13).

4. Procédé selon la revendication 1 ou 2, caractérisé en ce que la trempe de la couche superficielle s'effectue après la séparation par cassure du chapeau de palier (18) de l'élément restant (13).

5. Procédé selon l'une des revendications 1 à 4, caractérisé en ce que l'on usine la surface de roulement (20), pour un ajustement parfait, au moyen d'un usinage mécanique très précis.

6. Procédé selon l'une des revendications 1 à 5, caractérisé en ce que, après la séparation par cassure, on réunit le chapeau de palier (18) à l'élément restant (13) de manière à pouvoir les séparer, et en ce que l'usinage mécanique et/ou la trempe de la couche superficielle s'effectuent lorsque ces éléments sont réunis.

7. Procédé selon l'une des revendications 1 à 6, caractérisé en ce que l'on prévoit au niveau de la zone de séparation (16) entre le chapeau de palier (18) et l'élément restant (13) au moins une entaille de rupture (17, 24), en ce que l'on élimine à peu près complètement l'entaille de rupture (17, 24), après la séparation par cassure, au moyen d'un usinage mécanique et en ce que l'on effectue ensuite la trempe de la couche superficielle et l'usinage mécanique très précis de la surface de roulement (20).

8. Procédé selon l'une des revendications 1 à 7, caractérisé en ce que l'on prévoit au niveau de la zone de séparation (16) entre le chapeau de palier (18) et l'élément restant (13) au moins une entaille de rupture (17, 24) dont la profondeur est déterminée inférieure à la profondeur de trempe obtenue par la trempe de la couche superficielle et en ce que l'on élimine à peu près complètement l'entaille de rupture (17, 24) lors de l'usinage mécanique et/ou lors de l'usinage mécanique très précis de la surface de roulement (20).

9. Procédé selon l'une des revendications 1 à 8, caractérisé en ce que l'on fabrique la pièce façonnée à partir d'un matériau fritté ayant 0,5 à 1 % en poids de carbone.

10. Procédé selon l'une des revendications 1 à 9, caractérisé en ce que l'on fabrique la pièce façonnée à partir d'un matériau fritté ayant 0,7 % en poids de carbone.

11. Procédé selon l'une des revendications 1 à 10, caractérisé en ce que l'on fabrique la pièce façonnée par frittage-forgeage, l'entaille de rupture (24) étant pratiquée avant le processus de forgeage et munie d'une couche protectrice et étant à peu près complètement fermée lors du processus de forgeage.

12. Procédé selon l'une des revendications 1 à 11, caractérisé en ce que la trempe de la couche superficielle s'effectue au moyen d'une trempe par induction.

13. Procédé selon l'une des revendications 1 à 12, caractérisé en ce que l'on fabrique comme élément constitutif (11) une bielle avec une tête de bielle (15) séparée.

14. Elément constitutif en un matériau ayant au moins 0,5 % en poids de carbone et ayant au moins une surface de roulement (20) divisée se trouvant d'une part sur un chapeau de palier (18) et d'autre part sur l'élément restant (13) et destinée à des éléments de roulement, élément constitutif qui comporte au moins dans la zone de la surface de roulement (20) une couche superficielle (22) trempée de dureté Rockwell échelle C au moins égale à 55, la zone de séparation (16) entre le chapeau de palier (18) et l'élément restant (13) comportant une surface de séparation (19) produite lors d'une séparation par cassure.

15. Elément constitutif selon la revendication 14, caractérisé en ce que le matériau contient 0,5 à 1 % en poids de carbone.

16. Elément constitutif selon la revendication 14 ou 15, caractérisé en ce que le matériau contient 0,7 % en poids de carbone.

17. Elément constitutif selon l'une des revendications 14 à 16, caractérisé en ce que l'on utilise comme matériau un matériau fritté.

18. Elément constitutif selon l'une des revendications 14 à 17, caractérisé en ce que l'élément constitutif (11) est conçu sous forme de bielle avec une tête de bielle (15) séparée.
